## Europäisches Patentamt
## European Patent Office
## Office européen des brevets

(19)

(11) Veröffentlichungsnummer: **0 190 715**

**B1**

(12) # EUROPÄISCHE PATENTSCHRIFT

(45) Veröffentlichungstag der Patentschrift:
25.10.89

(51) Int. Cl.⁴: **B 60 R 1/06**

(21) Anmeldenummer: **86101414.0**

(22) Anmeldetag: **04.02.86**

(54) **Fahrzeug-Flügeltür.**

(30) Priorität: **06.02.85 DE 3503966**

(43) Veröffentlichungstag der Anmeldung:
**13.08.86 Patentblatt 86/33**

(45) Bekanntmachung des Hinweises auf die Patenterteilung:
**25.10.89 Patentblatt 89/43**

(84) Benannte Vertragsstaaten:
**DE FR GB IT SE**

(56) Entgegenhaltungen:
**FR-A-2 531 020**
**US-A-2 596 632**

(73) Patentinhaber: **Iveco Magirus Aktiengesellschaft,
Schillerstrasse 2 Postfach 27 40, D-7900
Ulm/Donau (DE)**

(72) Erfinder: **Pfeifle, Roland, Steinheimerstrasse 39,
D-7916 Nersingen (DE)**

(74) Vertreter: **Socha, Peter, Iveco Magirus AG
Postfach 2740 Schillerstrasse 2, D-7900 Ulm (DE)**

EP 0 190 715 B1

**Beschreibung**

Die Erfindung bezieht sich auf eine Fahrzeug-Flügeltür, insbesondere Flügeltür eines Nutzfahrzeug-Fahrerhauses bzw. eines Omnibusses, mit einem oberen, mit merklichem Abstand außerhalb der von der Fahrzeugseite gesehenen Fahrzeugkontur angeordneten Scharnier und einem unteren Scharnier zwecks Ausbildung einer im wesentlichen vertikalen Flügeltür-Schwenkachse.

Beim Bau von Nutzfahrzeugen besteht aus Gründen der Energieeinsparung eine Tendenz zur Konstruktion von windschlüpfrigen Vorderwänden die es mit sich bringen, daß die Windschutzscheiben immer mehr zur Vertikalen geneigt werden. Die vorderen Ecksäulen und damit auch die Türkontur werden dadurch ebenfalls zwangsläufig immer mehr nach hinten geneigt. Bei einer Flügeltür, die wie bei Nutzfahrzeugen in üblicher Weise an der Ecksäule mit einem Scharnier versehen ist, ergibt sich aufgrund der windschlüpfrigen Form die Schwierigkeit der Anordnung und Ausbildung der Scharniere, die auch aus ästhetischen Gründen nicht oder zumindest nur wenig aus der Umrißform des Fahrzeugs hervortreten sollen. Üblicherweise wird aus Gründen der Stabilität der Tür eine Scharnieranordnung gewählt, bei der mindestens zwei Scharniere in einer Vertikalanordnung möglichst weit auseinanderliegen und zumindest um die halbe Türhöhe beabstandet voneinander sind.

Der vorliegenden Erfindung liegt die Aufgabe zugrunde, eine Fahrzeug-Flügeltür der eingangs erwähnten Gattung zu schaffen, welche dennoch bei einfachem Aufbau eine möglichst stromlinienförmige Ausbildung ermöglicht.

Diese Aufgabe wird erfindungsgemäß dadurch gelöst, daß das obere Scharnier im Sichtbereich praktisch vollständig innerhalb des Haltearms eines ohnehin vorhandenen Fahrzeug-Außenspiegels untergebracht ist.

Eine besonders vorteilhafte Weiterbildung der Erfindung sieht vor, daß am im wesentlichen vertikalen Schwenkzapfen des oberen Scharniers auch der Haltearm des Fahrzeug-Außenspiegels befestigt und verschwenkbar gelagert ist. Der verschwenkbare Haltearm des Außenspiegels ist in bevorzugter Weiterbildung der Erfindung als windschlüpfriges Flachteil ausgebildet.

Eine besonders windschlüpfrige und einfach zu fertigende Ausführungsform kennzeichnet sich durch einen Haltearm, der einstückig mit der eigentlichen Spiegelhalterung ausgebildet ist.

Alternativ können der Haltearm und die eigentliche Spiegelhalterung auch getrennte Bauteile sein, die lösbar miteinander befestigt sind. Eine lösbare Befestigung ist insbesondere von Vorteil, wenn das Fahrzeug eine besonders enge Durchfahrt zu passieren hat und für die Durchfahrt der Außenspiegel demontiert werden muß.

Mit Vorteil ist im Innern des Haltearms und dem Spiegelhalterung eine Leitungsführung für die Spiegelheizung und/oder Spiegelverstellung vorgesehen. Im einzelnen kennzeichnet sich die Verschwenkanordnung eines Fahrzeugaußenspiegels durch eine am Schwenkzapfen des oberen Scharniers vorgesehene axiale Druckfeder, welche den Haltearm in einer in Schwenkrichtung des Außenspiegels lösbaren Rast vorspannt.

Bei einer besonders windschlüpfrigen Ausgestaltung mit nach oben fahrzeugeinwärts geneigter Tür befindet sich das untere Flügeltür-Scharnier innerhalb der Fahrzeugaußenkontur. Das untere Scharnier ist bevorzugt ein Bügelscharnier.

Durch die Erfindung kann somit aufgrund der Tatsache, daß das obere Flügeltür-Scharnier vergleichsweise weit außerhalb der Fahrzeugaußenkontur aufgrund des ohnehin vorhandenen Fahrzeug-Außenspiegels positioniert werden kann, nicht nur eine weit nach hinten gezogene windschlüpfrige Windschutzscheibe konzipiert, sondern auch ein vergleichsweise großer Scharnierabstand realisiert werden, welcher für eine besonders stabile Schwenkhalterung der Tür sorgt. Während nach dem eingangs erwähnten bekannten Stand der Technik ein Fahrzeug-Außenspiegel allenfalls mit separater Schwenkachse am oberen außerhalb der Fahrzeugkontur angeordneten Flügeltür-Scharnier befestigt ist, kann mit Vorteil bei der Erfindung sowohl für den Außenspiegel als auch für das obere Scharnier eine gemeinsame Schwenkachse-mit einem gemeinsamen Schwenkzapfen vorgesehen werden, so daß die Konstruktion weiter vereinfacht wird. Ist der verschwenkbare Haltearm des Außenspiegels zudem ein windschlüpfriges Flachteil, ergibt sich ein noch geringerer Luftwiderstand, insbesondere dann, wenn die Leitungen für die Spiegelheizung und die Spiegelverstellung innerhalb des Haltearms und der eigentlichen Spiegelhalterung vorgesehen sind.

Demgegenüber offenbart die US-A-2 596 632 ein weitgehend kastenförmiges Fahrzeug der damals üblichen Art, bei welchem ein oberes und ein unteres Türscharnier im wesentlichen gleich weit, und zwar nur geringfügig vom Fahrzeugumriß vorstehen. Am oberen Türscharnier ist mittels eines U-Profils der Haltearm eines Spiegels angelenkt.

Die Erfindung wird nachfolgend anhand von Ausführungsbeispielen unter Bezugnahme auf die beigefügte Zeichnung näher beschrieben; es zeigen:

Fig. 1  in schematischer Seitenansicht die vordere Flügel-Tür eines Nutzfahrzeug-Fahrerhauses oder Omnibusses,

Fig. 2  eine schematische Ansicht auf das untere Flügeltür-Scharnier, gesehen in Richtung Y der Fig. 1,

Fig. 3  eine schematische Ansicht auf das obere Flügeltür-Scharnier, gesehen in Richtung X der Fig. 1,

Fig. 4  das obere Scharnier in einem Schnitt A - A längs der Scharnierachse gemäß Fig. 1, und

Fig. 5 eine schematische Teilansicht in Richtung W der Fig. 4.

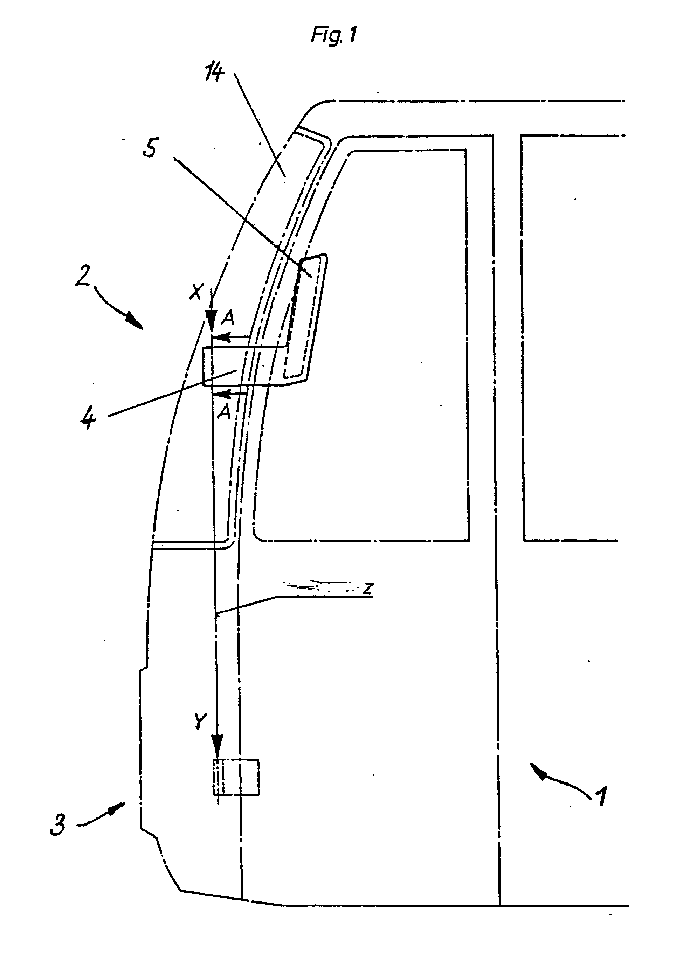

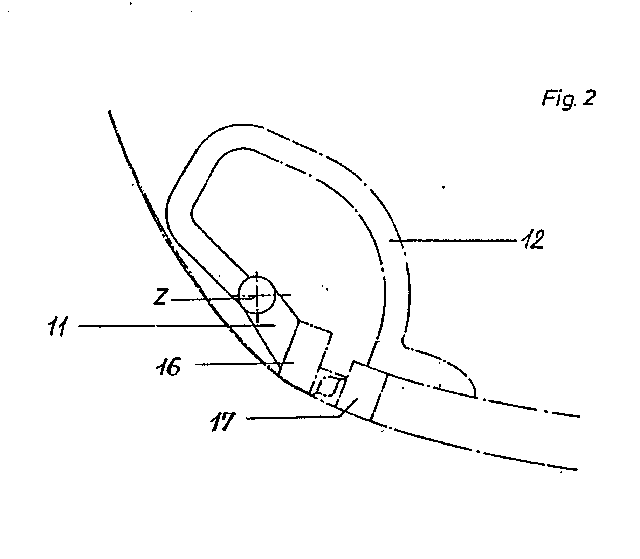

Gemäß Fig. 1 umfaßt eine vordere Flügeltür 1 eines Nutzfahrzeug-Fahrerhauses ein oberes Scharnier 2 und ein unteres Scharnier 3. Beide Scharniere 2, 3 sind vergleichsweise weit voneinander beabstandet und besitzen eine im wesentlichen vertikale Schwenkachse z. Das untere Scharnier 3 ist gemäß Fig. 2 innerhalb der Fahrzeugaußenkontur angeordnet und weist insbesondere Bügelform auf, während das obere Scharnier 2 aufgrund der windschlüpfrigen, d. h. weit nach hinten und nach innen gezogenen Windschutzscheibe 14 außerhalb der Fahrzeugaußenkontur gelegen mithin grundsätzlich Wind und Wetter ausgesetzt ist.

Insbesondere umfaßt sowohl das obere Scharnier 2 als auch das untere Scharnier 3 eine karosseriefeste Ecksäule 16 sowie eine flügeltürfeste Befestigungssäule 17, wobei an der Ecksäule 16 jeweils der karosseriefeste Scharnierteil 11 der Scharniere 2, 3 mit der im wesentlichen vertikalen Schwenkachse z und an der flügeltürfesten Befestigungssäule 17 der andere Scharnierteil 12 befestigt ist.

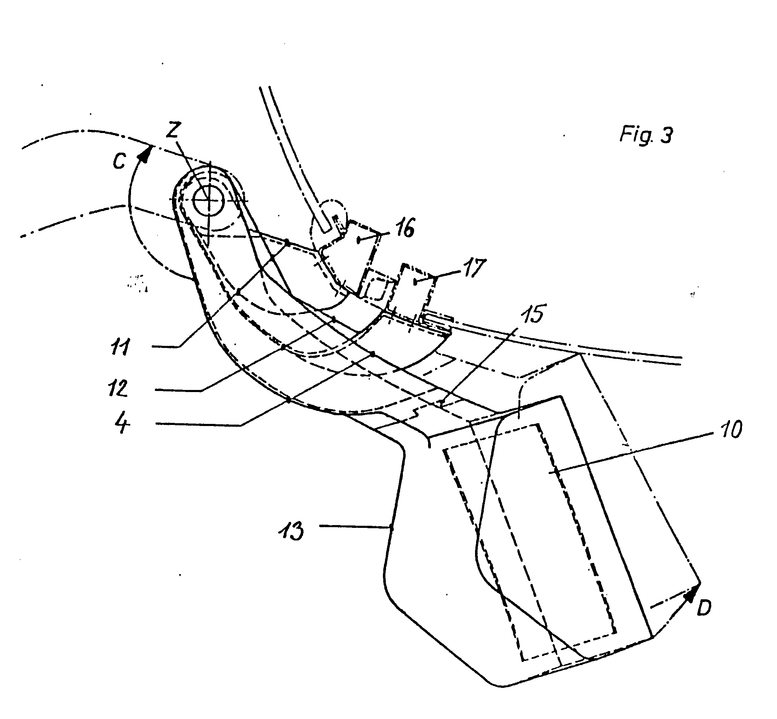

Gemäß Fig. 3 ist der karosseriefeste Scharnierteil 11 des oberen Scharniers 2 etwa in Höhe der Mitte der Windschutzscheibe 14 horizontal nach vorne in Richtung der Windschutzscheibe 14 gezogen. Der Schwenkzapfen 6 mit der im wesentlichen vertikalen Schwenkachse z ist gleichzeitig Befestigungs- und Anlenkstelle eines schwenkbaren Haltearms 4 für einen Fahrzeug-Außenspiegel 5, wobei die beiden Scharnierteile 11 und 12 des oberen Scharniers in der Draufsicht gemäß Fig. 3 im wesentlichen innerhalb der Außenkontur des schwenkbaren Haltearms 4 angeordnet und somit Windschlüpfrigkeit zumindest dann sichergestellt ist, wenn der schwenkbare Haltearm 4 als Flachteil ausgebildet ist.

Durch die Erfindung wird in den ohnehin vorhandenen Fahrzeug-Außenspiegel 5 das obere, außerhalb der Fahrzeugkontur angeordnete Scharnier 2 integriert, wobei sowohl für den Außenspiegel als auch für das obere Scharnier ein gemeinsamer Schwenkzapfen 6 vorgesehen ist, wodurch nicht nur der Scharnierteil 12 der Flügeltür 1, sondern auch der Haltearm 4 des Fahrzeug-Außenspiegels 5 erforderlichenfalls geschwenkt werden kann beispielsweise dann, wenn das Fahrzeug eine enge Durchfahrt zu passieren hat und der Fahrzeug-Außenspiegel 5 zu weit zur Seite vorsteht und aus diesem Grunde nach innen in Schwenkrichtung D oder nach vorne in Schwenkrichtung C weggeschwenkt werden muß.

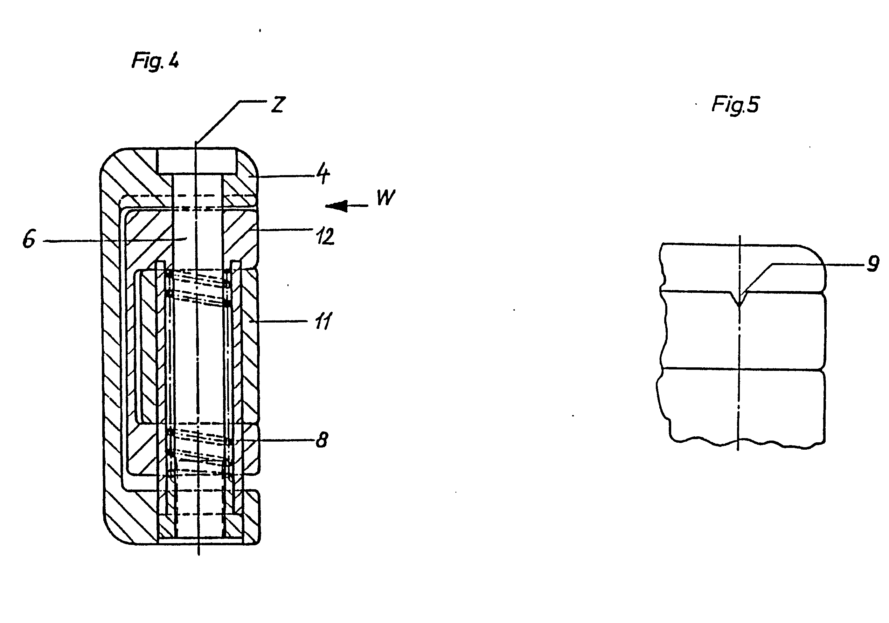

Die Verschwenkanordnung des Fahrzeug-Außenspiegels 5 ist im einzelnen den Figuren 4 und 5 zu entnehmen. Sie umfaßt Schwenkzapfen 6 eine axiale Druckfeder 8, die den schwenkbaren Haltearm 4 in einer in den Schwenkrichtungen C, D des Außenspiegels 5 lösbaren Rast 9 vorspannt.

Im schwenkbaren Haltearm 4 befindet sich ferner eine (nicht veranschaulichte) Leitungsführung für die Spiegelheizung und die Spiegelverstellung. Die Leitungsführung ist mithin nicht von außen sichtbar, beeinträchtigt nicht den $c_W$-Wert des Fahrzeugs und kann damit auch nicht von Ästen oder dergleichen abgerissen werden.

In Fig. 3 ist in ausgezogener Linie ein schwenkbarer Haltearm 4 gezeigt, der einstückig mit der eigentlichen Spiegelhalterung 13 ausgebildet ist, in welcher der eigentliche Spiegel 10 des Fahrzeug-Außenspiegels 5 sitzt. Eine weitere Ausführungsvariante kennzeichnet sich gemäß gestrichelter Linie der Fig. 3 durch eine Schwalbenschwanzverbindung 15 zwischen dem schwenkbaren Haltearm 4 und der eigentlichen Spiegelhalterung 13, so daß der eigentliche Spiegel vollständig vom Haltearm 4 gelöst werden kann, beispielsweise für ein Durchfahren des Fahrzeuges durch eine Waschstraße. Die Schwalbenschwanzverbindung 15 umfaßt integrierte elektrische Kontaktschienen für die elektrische Leitung der Spiegelheizung innerhalb des schwenkbaren Haltearms 4.

## Patentansprüche

1. Fahrzeug-Flügeltür (1), insbesondere Flügeltür eines Nutzfahrzeug-Fahrerhauses bzw. eines Omnibusses, mit einem oberen, mit merklichem Abstand ausserhalb der von der Fahrzeugseite gesehenen Fahrzeugkontur angeordneten Scharnier (2) und einem unteren Scharnier (3) zwecks Ausbildung einer im wesentlichen vertikalen Flügeltür-Schwenkachse (z), dadurch gekennzeichnet, daß das obere Scharnier (2) im Sichtbereich praktisch vollständig innerhalb des Haltearms (4) eines ohnehin vorhandenen Fahrzeug-Außenspiegels (5) untergebracht ist.

2. Flügeltür nach Anspruch 1, dadurch gekennzeichnet, daß am im wesentlichen vertikalen Schwenkzapfen (6) des oberen Scharniers (2) auch der Haltearm (4) des Fahrzeug-Außenspiegels (5) befestigt und verschwenkbar gelagert ist.

3. Flügeltür nach Anspruch 2, dadurch gekennzeichnet, daß der verschwenkbar Haltearm (4) des Außenspiegels (5) als windschlüpfriges Flachteil ausgebildet ist.

4. Flügeltür nach Anspruch 3, dadurch gekennzeichnet, daß Haltearm (4) und eigentliche Spiegelhalterung einstückig ausgebildet sind.

5. Flügeltür nach Anspruch 3, dadurch gekennzeichnet, daß der Haltearm (4) an der eigentlichen Spiegelhalterung lösbar befestigt ist.

6. Flügeltür nach Anspruch 1 bis 5, dadurch gekennzeichnet, daß im Innern des Haltearms (4) und der eigentlichen Spiegelhalterung eine Leitungsführung für Spiegelheiz- und/oder Spiegelverstellung vorgesehen ist.

7. Flügeltür nach Anspruch 1 bis 6, dadurch gekennzeichnet, daß die Verschwenkanordnung des Außenspiegels (5) am Schwenkzapfen (6) eine axiale Druckfader (8) vorsieht, die den Haltearm (4) in einer in Schwenkrichtung des Außenspiegels (5) lösbaren Rast (9) vorspannt.

8. Flügeltür nach Anspruch 1 bis 7, dadurch gekennzeichnet, daß das untere Scharnier (3) ein Bügelscharnier ist, dessen Scharnierachse (z) innerhalb der Fahrzeugaußenkontur liegt.

**Claims**

1. A vehicle swing door (1), especially a swing door of a driver's cab in a commercial vehicle or bus, comprising an upper hinge (2) disposed at an appreciable distance outside the contour of the vehicle as seen from the side thereof and a lower hinge (3) for forming a substantially vertical axis of rotation (z) for the swing door, characterised in that, as regards its visibility, the upper hinge (2) is practically completely disposed inside the arm (4) holding an outer mirror (5) which is in any case on the vehicle.

2. A swing door according to claim 1, characterised in that the arm (4) holding the outer mirror (5) on the vehicle is also secured and pivotably mounted on the substantially vertical pivot (6) of the upper hinge (2).

3. A swing door according to claim 2, characterised in that the pivotable arm (4) holding the outer mirror (5) is constructed as a streamlined substantially flat part.

4. A swing door according to claim 3, characterised in that the arm (4) and the actual mirror holder are made in one piece.

5. A swing door according to claim 3, characterised in that the arm (4) is releasably secured to the actual mirror holder.

6. A swing door according to any one of claims 1 to 5, characterised in that wiring for heating and/or adjusting the mirror is provided inside the arm (4) and the actual mirror holder.

7. A swing door according to any one of claims 1 to 6, characterised in that the device for pivoting the outer mirror (5) on the pivot (6) comprises an axial pressure spring (8) which prestresses the arm (4) in a catch (9) releasable in the direction of pivoting of the outer mirror (5).

8. A swing door according to any one of claims 1 to 7, characterised in that the lower hinge (3) is a curved hinge and its axis (5) lies inside the outer contour of the vehicle.

**Revendications**

1. Porte à battant de véhicule (1), notamment porte à battant d'une cabine de conducteur de véhicule utilitaire ou d'autobus avec une charnière supérieure (2) disposée à une sensible distance en dehors du contour du véhicule, vue de côté du véhicule, et une charnière inférieure (3), aux fins de constitution d'un axe de pivotement de porte à battant (z) pour l'essentiel vertical, caractérisée en ce que la charnière supérieure (2) est, dans la zone visuelle, pratiquement entièrement logée à l'intérieur du bras de maintien (4) d'un rétroviseur extérieur de véhicule (5) existant de toute manière.

2. Porte à battant selon la revendication 1, caractérisée en ce que le bras de maintien (4) du rétroviseur extérieur du véhicule (5) est fixé sur le pivot (6) essentiellement vertical de la charnière supérieure (2) avec liberté de pivotement sur celui-ci.

3. Porte à battant selon la revendication 2, caractérisée en ce que le bras de maintien (4) orientable du rétroviseur extérieur (5) est constitué par une pièce aplatie carénée.

4. Porte à battant selon la revendication 3, caractérisée en ce que le bras de maintien (4) et l'attache du miroir proprement dite sont constitués d'une seule pièce.

5. Porte à battant selon la revendication 3, caractérisée en ce que le bras de maintien (4) et l'attache du miroir proprement dite sont fixés entre eux de manière amovible.

6. Porte à battant selon les revendications 1 à 5, caractérisée en ce qu'il est prévu à l'intérieur du bras de maintien (4) et de l'attache du miroir proprement dite un câblage pour le chauffage du miroir et/ou pour le réglage du miroir.

7. Porte à battant selon les revendications 1 à 6, caractérisée en ce que le dispositif d'orientation du rétroviseur extérieur (5) prévoit sur le pivot (6) un ressort de pression (8) axial qui précontraint le bras de maintien (4) dans un cran d'arrêt (9) amovible dans la direction d'orientation du rétroviseur extérieur.

8. Porte à battant selon les revendications 1 à 7, caractérisée en ce que la charnière inférieure (3) est une charnière recourbée en étrier dont l'axe de charnière (z) se trouve à l'intérieur du contour extérieur du véhicule.

Fig. 1

Fig. 2

Fig. 3

EP 0 190 715 B1

*Fig. 4*

*Fig. 5*

Z

4

W

6

12

11

8

9

EP 0 190 715 B1